# FASCICULE DE BREVET EUROPEEN

(11) **EP 1 933 436 B1**
(45) Date de publication et mention de la délivrance du brevet: **10.05.2017**
(21) Numéro de dépôt: 07354052.8
(22) Date de dépôt: 04.10.2007
(51) Int. Cl.: H02G 3/10

(54) **Dispositif de fixation d'un coffret électrique sur une canalisation électrique**
Vorrichtung zum Befestigen eines Stromkastens auf einem elektrischen Kabel- und Leitungssystem
Device for attaching a switch box to a wiring system

(30) Priorité: 15.12.2006 FR 0610919
(43) Date de publication de la demande: 18.06.2008
(73) Titulaire: Schneider Electric Industries SAS, 92500 Rueil-Malmaison (FR)
(72) Inventeur: De Oliveira, David, Schneider Electric Industries, 38050 Grenoble Cedex 09 (FR); Bouffet, Olivier, Schneider Electric Industries, 38050 Grenoble Cedex 09 (FR); Blochouse, Philippe, Schneider Electric Industries, 38050 Grenoble Cedex 09 (FR)
(74) Mandataire: Tripodi, Paul

(56) Documents cités:
- ES-U- 1 060 640
- FR-E- 82 992
- US-A- 5 602 363
- US-A- 6 072 121

## Description

La présente invention concerne un dispositif de fixation d'un coffret électrique sur une canalisation électrique, ledit dispositif comportant un moyen de manoeuvre commandant un moyen de fixation du coffret sur la canalisation, ledit moyen de manoeuvre étant déplaçable entre une position dite fermée dans laquelle le coffret est fixé à la canalisation et une position dite ouverte dans laquelle le coffret n'est pas fixée à la canalisation.

On connaît des systèmes d'accrochage de coffrets sur des canalisations, lesquels sont disposés à l'extérieur du coffret et comportent des organes de manoeuvre du type dit à sauterelle.

Ces systèmes présentent une structure compliquée et dégradent l'aspect esthétique de l'ensemble.

La présente invention résout ces problèmes et propose un dispositif de fixation d'un coffret électrique sur une canalisation électrique, de conception simple, permettant de verrouiller le coffret sur la gaine et d'empêcher le débrochage du coffret en fonctionnement, et améliorant l'esthétique du coffret sur la gaine.

A cet effet, la présente invention a pour objet un dispositif de fixation d'un coffret électrique sur une canalisation électrique, le dit coffret comportant une face de fixation à la canalisation et une porte d'accès à l'intérieur du coffret, ledit dispositif comportant un moyen de manoeuvre commandant un moyen de fixation du coffret sur la canalisation, ledit moyen de manoeuvre étant déplaçable entre une position dite fermée dans laquelle le coffret est fixé à la canalisation et une position dite ouverte dans laquelle le coffret n'est pas fixé à la canalisation. Ce dispositif est caractérisé en ce qu'il est placé à l'intérieur du coffret, en ce qu'en position fermée du moyen de manoeuvre, le moyen de fixation traverse la face de fixation précitée du coffret et coopère avec la canalisation pour assurer la fixation du coffret sur la canalisation, et en ce que, en position ouverte du moyen de manoeuvre, celui-ci empêche la fermeture de la porte.

Selon une réalisation particulière de l'invention, ce dispositif comporte un moyen pour indexer et verrouiller l'organe de manoeuvre en position fermée.

Selon une caractéristique particulière de l'invention, le moyen de fixation comporte deux crochets coopérant avec les bords extérieurs de la canalisation.

Selon une autre caractéristique, ce dispositif comporte un levier monté articulé sur un support et comportant à l'une de ses extrémités, une première partie formant une poignée de manoeuvre, et à son extrémité opposée, une seconde partie coopérant avec deux biellettes de translation articulées l'une par rapport à l'autre en un axe traversant une rainure arquée appartenant à la seconde partie précitée du levier, l'une des biellettes, dite première, comportant à l'une de ses extrémités libres une rainure recevant à coulissement l'axe d'articulation du levier sur le support et, l'autre des deux biellettes, dite seconde, coopérant à son extrémité libre, avec deux leviers coudés à crochets articulés sur le support et disposés de part et d'autre des deux biellettes.

Selon une autre caractéristique, les leviers coudés à crochet comportent chacun un premier bras comportant un crochet et un second bras relié de manière articulé à l'extrémité libre de la seconde biellette, lesdits leviers étant articulés au support en un point situé entre les deux bras de chaque levier et en ce que les extrémités libres des seconds bras des leviers coudés comportent des rainures recevant à coulissement l'axe d'articulation de ces deux bras par rapport à la seconde bielle.

Selon une autre caractéristique, le moyen de verrouillage du levier en position fermé comporte un ergot prévu sur le levier coopérant avec un bossage prévu sur le support

Mais d'autres avantages et caractéristiques de l'invention apparaîtront mieux dans la description détaillée qui suit et se réfère aux dessins annexés donnés uniquement à titre d'exemple et dans lesquels :
- La figure 1 est une vue en perspective, d'un dispositif de fixation selon l'invention, en position de fermeture,
- La figure 2 est une vue en plan du dispositif en position ouverte,
- Les figures 3 et 4 sont deux vues en perspective, d'un coffret équipé d'un dispositif de fixation selon l'invention en position fermée, suivant respectivement deux orientations différentes du coffret, et
- Les figures 5 et 6 sont des vues identiques aux précédentes , le dispositif de l'invention étant en position ouverte.

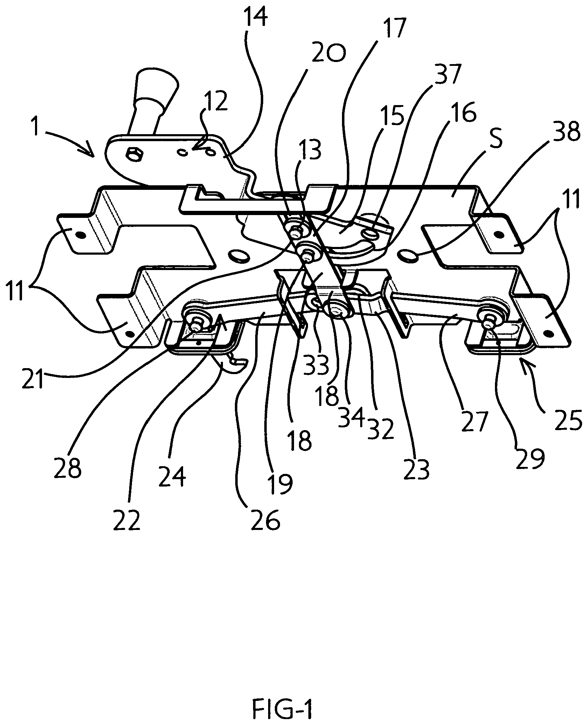

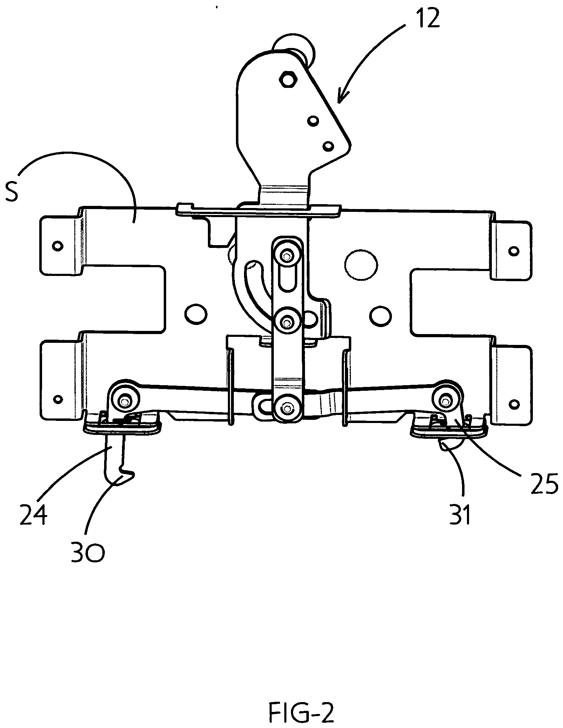

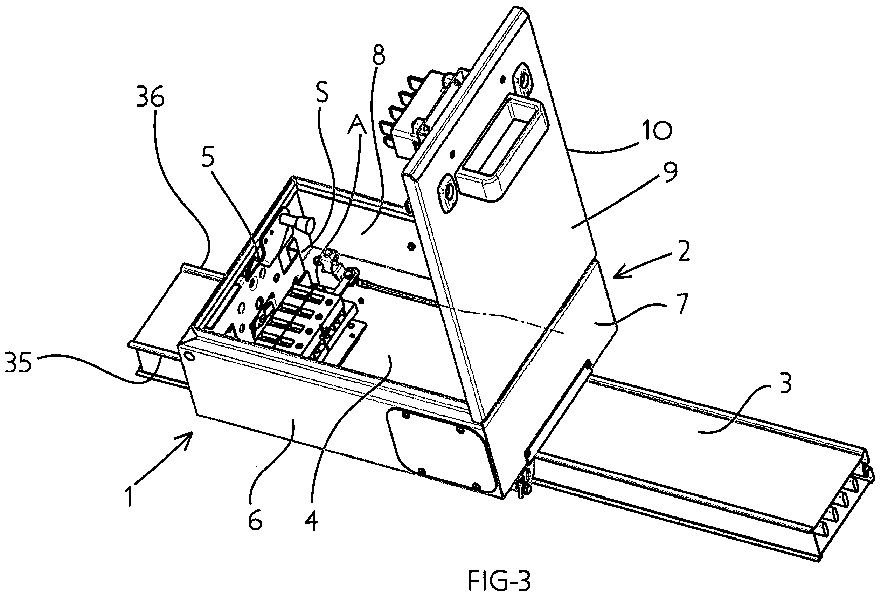

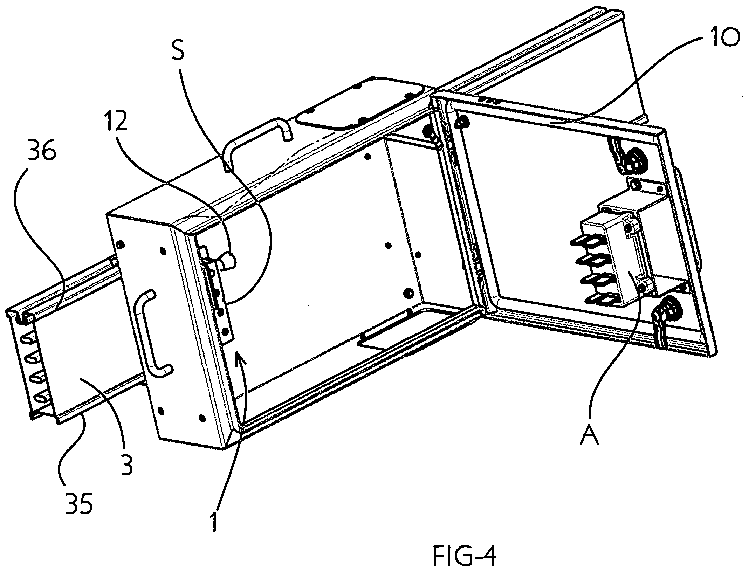

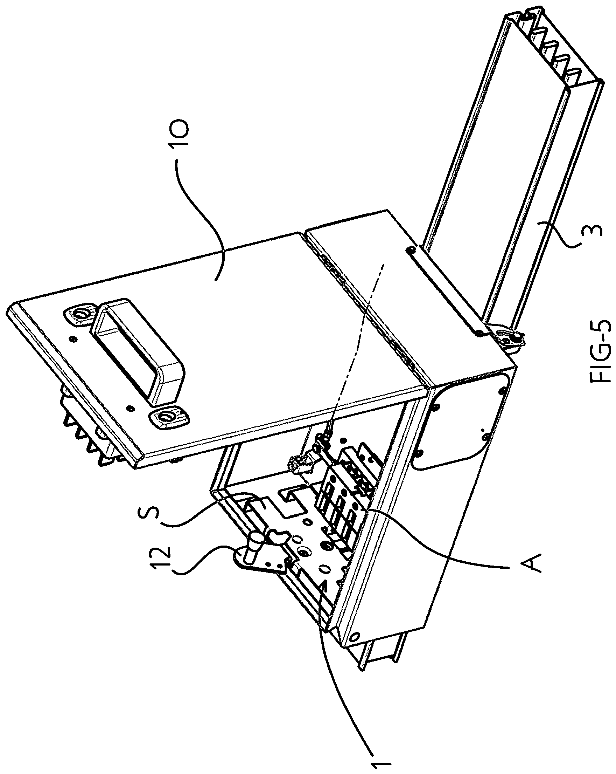

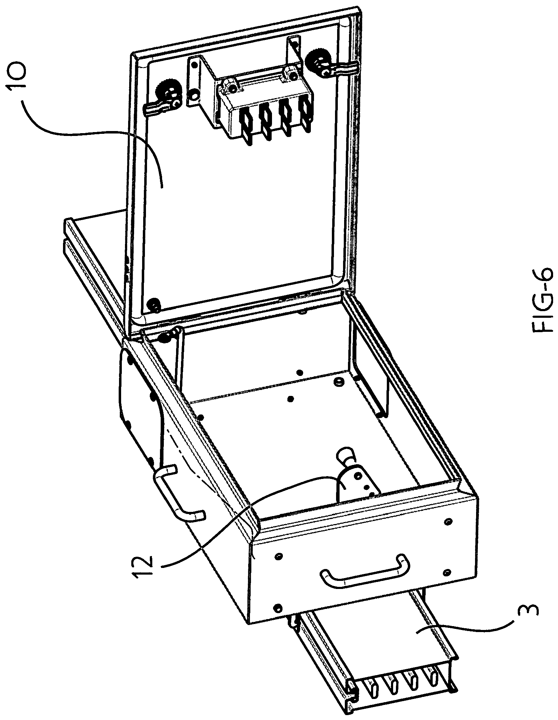

Sur les figures 1 et 2, on voit un dispositif de fixation 1 selon l'invention destiné à assurer la fixation d'un coffret 2 destiné à loger de l'appareillage électrique A sur une canalisation électrique 3, tel qu'illustré sur les figures 3 à 6.

Tel que représenté sur les figures 3 à 6, le coffret 2 présente une forme sensiblement parallélépipédique et comporte une face arrière 4 ou paroi de fond, quatre faces latérales 5,6,7,8 et une face avant 9 formant une porte 10 d'accès à la partie intérieure du coffret 2. Ce coffret 2 est destiné à être fixé sur une canalisation électrique 3 par sa face arrière 4 au moyen du dispositif de fixation 1 selon l'invention.

Ce dispositif 1 comporte un support plan S fixé sur l'une 5 des parois latérales 5 à 8 du coffret 2 au moyen de quatre pattes de fixation 11. Un levier 12 est articulé par rapport au support S autour d'un axe 13 fixe par rapport au support S. Ce levier 12 comporte une première partie 14 formant une poignée de manoeuvre et une seconde partie 15 comportant une rainure arquée 16. Ce dispositif comporte également deux bielles de translation 17,18 comportant une première 17 et une seconde 18 bielles articulées l'une par rapport à l'autre, autour d'un axe 19 monté à coulissement à l'intérieur de la rainure arquée précitée 16 de la seconde partie 15 du levier 12. L'une, dite première 17, de ces bielles, comporte à son extrémité libre, une rainure 20, apte à recevoir à coulissement une tige 21 fixée à la seconde partie 15 du levier et formant l'axe d'articulation du levier sur le support. La seconde bielle 18, à son extrémité libre, est reliée de manière articulée à l'une des extrémités d'un premier 22 et d'un second levier coudé 23. Chacun de ces leviers coudés 22,23 est formé d'un premier 24,25 et d'un second bras 26,27 sensiblement perpendiculaires l'un par rapport à l'autre, lesdits leviers coudés 22,23 étant articulés autour d'un axe 28,29 constitué par une tige fixée au support 8 et située entre les deux bras 24,26 et 25,27. L'un des bras 24,25 dit premier, comporte un crochet 30,31, tandis que le second bras 26,27 comporte à son extrémité libre, une rainure 32,33 recevant à coulissement l'axe d'articulation 34 de la seconde bielle 18 aux dits seconds bras 26,27 des leviers coudés 22,23. Les deux crochets 30,31 des premiers bras des leviers coudés 24,25 sont destinés à s'accrocher sur les bords extérieurs 35,36 de la canalisation 3 en position de fixation du dispositif 1.

Le support S comporte un bossage 37 destiné à coopérer avec un ergot 38 solidaire du levier 12 pour réaliser un indexage et un verrouillage dudit levier 12 en position fermée.

En position ouverte du dispositif, illustrée sur les figures 2, 5 et 6, le levier 12 est en position haute, les bielles de translation 17,18 en position basse, l'axe d'articulation 19 entre les deux bielles étant situé à la partie inférieure de la rainure arquée 16 de la seconde partie 15 du levier 12.

Lorsque le levier 12 est entraîné vers la gauche, c'est à dire vers la position de fermeture, le coulissement de l'axe d'articulation 19 des bielles 17,18 dans la rainure arquée 16 du levier 12, engendre le déplacement vers le haut des deux bielles 17,18. Il en résulte une traction sur les leviers coudés 22,23 à crochet entraînant un rapprochement des crochets 30,31 l'un par rapport à l'autre, et un accrochage des bords extérieurs 35,36 de la canalisation 3 entraînant la fixation du coffret 2 sur ladite canalisation 3 (figs 1,3,4).

L'ouverture du dispositif est réalisée en effectuant une manoeuvre inverse, entraînant l'éloignement des crochets 30,31 l'un de l'autre, et par là, la libération de la canalisation 3 (figs.2,5 et 6).

Lorsque le dispositif est dans la position fermé, il est possible de fermer la porte 10 du coffret 2. Par contre, lorsque le dispositif est en position ouverte, la poignée 14 du dit dispositif de fixation empêche toute fermeture. Ainsi, il est possible de s'assurer que le coffret 2 est verrouillé avant de procéder à la fermeture de la porte du coffret, laquelle fermeture n'est pas autorisée si le dispositif de fixation n'est pas en position fermée. Le débrochage du coffret en fonctionnement est alors rendu impossible sans ouvrir la porte du coffret.

On a donc réalisé selon l'invention, un dispositif de fixation sur une canalisation électrique permettant de verrouiller le coffret sur la gaine, de s'assurer que le coffret est verrouillé avant la fermeture de la porte du coffret et d'empêcher le débrochage du coffret en fonctionnement.

Le dispositif selon l'invention étant parfaitement intégré à l'intérieur du coffret, l'aspect du coffret n'est pas dégradé. Grâce à l'invention il est obtenu une meilleur protection du dispositif de fixation par rapport au milieu ambiant.

Bien entendu, l'invention n'est pas limitée aux modes de réalisation décrits et illustrés qui n'ont été donnés qu'à titre d'exemple.

## Revendications

1. Dispositif de fixation d'un coffret électrique (2) sur une canalisation électrique (3), le dit coffret comportant une face de fixation (4) à la canalisation (3) et une porte (10) d'accès à l'intérieur du coffret (2), ledit dispositif comportant un moyen de manoeuvre (14) commandant un moyen de fixation (22,23,30,31) du coffret (2) sur la canalisation (3), ledit moyen de manoeuvre (14) étant déplaçable entre une position dite fermée dans laquelle le coffret (2) est fixé à la canalisation (3) et une position dite ouverte dans laquelle le coffret (2) n'est pas fixé à la canalisation (3),
**caractérisé en ce qu'**il est placé à l'intérieur du coffret (2), **en ce qu'** en position fermée du moyen de manoeuvre (14), le moyen de fixation (22,23,30,31) traverse la face de fixation précitée (4) du coffret (2) et coopère avec la canalisation (3) pour assurer la fixation du coffret (2) sur la canalisation (3), et **en ce que**, en position ouverte du moyen de manoeuvre (14), celui-ci empêche la fermeture de la porte (10).

2. Dispositif de fixation selon la revendication 1, **caractérisé en ce qu'**il comporte un moyen pour indexer et verrouiller le moyen de manoeuvre (14) en position fermée.

3. Dispositif selon la revendication 1 ou 2, **caractérisé en ce que** le moyen de fixation (22,23,30,31) comporte deux crochets (30,31) coopérant avec les bords extérieurs (35,36) de la canalisation (3).

4. Dispositif selon l'une quelconque des revendications 1 à 3, **caractérisé en ce qu'**il comporte un levier (12) monté articulé sur un support S et comportant à l'une de ses extrémités, une première partie (14) formant une poignée de manoeuvre, et à son extrémité opposée, une seconde partie (15) coopérant avec deux bielles de translation (17,18) articulées l'une par rapport à l'autre en un axe (19) traversant une rainure arquée (16) appartenant à la seconde partie précitée (15) du levier (12), l'une (17) des bielles, dite première, comportant à l'une de ses extrémités libres une rainure (20) recevant à coulissement l'axe d'articulation (21) du levier (12) sur le support S, l'autre (18) des deux bielles (17,18), dite seconde, coopérant à son extrémité libre, avec deux leviers coudés (22,23) à crochets (30,31) articulés sur le support S et disposés de part et d'autre des deux bielles (17,18).

5. Dispositif selon la revendication 4, **caractérisé en ce que** les leviers coudés (22,23) à crochet (30,31) comportent chacun un premier bras (24,25) comportant un crochet (30,31) et un second bras (26,27) relié de manière articulé à l'extrémité libre de la seconde bielle (18), lesdits leviers coudés (22,23) étant articulés au support S en un point (28,29) situé entre les deux bras (24,26) et (25,27) de chaque levier coudé (22,23) et **en ce que** les extrémités libres des seconds bras (26,27) des leviers (22,23) comportent des rainures (32,33) recevant à coulissement l'axe d'articulation (34) de ces deux bras (26,27) par rapport à la seconde biellette (18).

6. Dispositif selon la revendication 2 et 3, **caractérisé en ce que** le moyen de verrouillage du levier (12) en position fermé comporte un ergot (38) prévu sur le levier (12) coopérant avec un bossage (37) prévu sur le support S.

## Patentansprüche

1. Vorrichtung zum Befestigen eines Schaltkastengehäuses (2) auf einem Schienenverteiler (3), wobei das Schaltkastengehäuse eine Fläche (4) zur Befestigung am Schienenverteiler (3) und eine Tür (10) zum Zugriff auf das Innere des Schaltkastengehäuses (2) aufweist, wobei die Vorrichtung ein Handhabungsmittel (14) aufweist, das ein Mittel (22, 23, 30, 31) zur Befestigung des Schaltkastengehäuses (2) auf dem Schienenverteiler (3) steuert, wobei das Handhabungsmittel (14) zwischen einer so genannten geschlossenen Position, in der das Schaltkastengehäuse (2) am Schienenverteiler (3) befestigt ist, und einer so genannten offenen Position, in der das Schaltkastengehäuse (2) nicht am Schienenverteiler (3) befestigt ist, verschiebbar ist,
**dadurch gekennzeichnet, dass** sie im Inneren des Schaltkastengehäuses (2) platziert ist, dass das Befestigungsmittel (22, 23, 30, 31) in der geschlossenen Position des Handhabungsmittels (14) die oben genannte Befestigungsfläche (4) des Schaltkastengehäuses (2) überquert und mit dem Schienenverteiler (3) zusammenwirkt, um die Befestigung des Schaltkastengehäuses (2) am Schienenverteiler (3) zu gewährleisten, und dass dieses in der offenen Position des Handhabungsmittels (14) das Schließen der Tür (10) verhindert.

2. Befestigungsvorrichtung nach Anspruch 1, **dadurch gekennzeichnet, dass** sie ein Mittel zum Einrasten und Verriegeln des Handhabungsmittels (14) in der geschlossenen Position aufweist.

3. Vorrichtung nach Anspruch 1 oder 2, **dadurch gekennzeichnet, dass** das Befestigungsmittel (22, 23, 30, 31) zwei Haken (30, 31) aufweist, die mit den Außenrändern (35, 36) des Schienenverteilers (3) zusammenwirken.

4. Vorrichtung nach einem der Ansprüche 1 bis 3, **dadurch gekennzeichnet, dass** sie einen Hebel (12) aufweist, der gelenkig an einer Stütze S montiert ist und an einem seiner Enden ein erstes Teil (14), das einen Handhabungsgriff bildet, und an seinem gegenüberliegenden Ende ein zweites Teil (15) aufweist, das mit zwei Translationsstangen (17, 18) zusammenwirkt, die bezüglich einander gelenkig um eine Achse (19) angebracht sind, die eine bogenförmige Nut (16) durchquert, die zu dem oben genannten zweiten Teil (15) des Hebels (12) gehört, wobei eine (17) der Stangen, die so genannte erste, an einem ihrer freien Enden eine Nut (20) aufweist, die die Achse (21) zum gelenkigen Anbringen des Hebels (12) an der Stütze S gleitend aufnimmt, und die andere (18) der beiden Stangen (17, 18), die so genannte zweite, an ihrem freien Ende mit zwei Winkelhebeln (22, 23) mit Haken (30, 31) zusammenwirkt, die gelenkig an der Stütze S angebracht und beiderseits der beiden Stangen (17, 18) angeordnet sind.

5. Vorrichtung nach Anspruch 4, **dadurch gekennzeichnet, dass** die Winkelhebel (22, 23) mit Haken (30, 31) jeweils einen ersten Arm (24, 25), der einen Haken (30, 31) aufweist, und einen zweiten Arm (26, 27) aufweisen, der gelenkig mit dem freien Ende der zweiten Stange (18) verbunden ist, wobei die Winkelhebel (22, 23) an einer Stelle (28, 29) gelenkig an der Stütze S angebracht sind, die sich zwischen den beiden Armen (24, 26) und (25, 27) jedes Winkelhebels (22, 23) befindet, und dass die freien Enden der zweiten Arme (26, 27) der Hebel (22, 23) Nuten (32, 33) aufweisen, die die Achse (34) zum gelenkigen Anbringen dieser beiden Arme (26, 27) bezüglich der zweiten Stange (18) gleitend aufnehmen.

6. Vorrichtung nach Anspruch 2 und 3, **dadurch gekennzeichnet, dass** das Mittel zum Verriegeln des Hebels (12) in geschlossener Position eine am Hebel (12) vorgesehene Nase (38) aufweist, die mit einem an der Stütze S vorgesehenen Buckel (37) zusammenwirkt.

## Claims

1. Device for fixing an electrical panel (2) to busbar trunking (3), said panel having a face (4) for fixing to the trunking (3) and a door (10) for accessing the inside of the panel (2), said device having a manipulating means (14) that controls a means (22, 23, 30, 31) for fixing the panel (2) to the trunking (3), said manipulating means (14) being movable between a position known as the closed position, in which the panel (2) is fixed to the trunking (3), and a position known as the open position, in which the panel (2) is not fixed to the trunking (3),
**characterized in that** it is placed inside the panel (2), **in that**, in the closed position of the manipulating means (14), the fixing means (22, 23, 30, 31) passes through the abovementioned fixing face (4) of the panel (2) and engages with the trunking (3) in order to fix the panel (2) to the trunking (3), and **in that**, in the open position of the manipulating means (14), the latter prevents the door (10) from being closed.

2. Fixing device according to Claim 1, **characterized in that** it has a means for indexing and locking the manipulating means (14) in the closed position.

3. Device according to Claim 1 or 2, **characterized in that** the fixing means (22, 23, 30, 31) has two hooks (30, 31) that engage with the outer edges (35, 36) of the trunking (3).

4. Device according to any one of Claims 1 to 3, **characterized in that** it has a lever (12) that is mounted in a hinged manner on a support S and has, at one of its ends, a first part (14) that forms a manipulating handle, and, at its opposite end, a second part (15) that cooperates with two translatory link rods (17, 18) that are hinged with respect to one another by a pin (19) passing through a curved slot (16) belonging to the second abovementioned part (15) of the lever (12), one (17) of the link rods, known as the first link rod, having, at one of its free ends, a slot (20) that receives in a sliding manner the hinge pin (21) of the lever (12) on the support S, the other (18) of the two link rods (17, 18), known as the second link rod, cooperating, at its free end, with two elbowed levers (22, 23) having hooks (30, 31) that are hinged to the support S and disposed on either side of the two link rods (17, 18).

5. Device according to Claim 4, **characterized in that** the elbowed levers (22, 23) having hooks (30, 31) each have a first arm (24, 25) having a hook (30, 31) and a second arm (26, 27) connected in a hinged manner to the free end of the second link rod (18), said elbowed levers (22, 23) being hinged to the support S at a point (28, 29) situated between the two arms (24, 26) and (25, 27) of each elbowed lever (22, 23), and **in that** the free ends of the second arms (26, 27) of the levers (22, 23) have slots (32, 33) that receive the hinge pin (34) of these two arms (26, 27) in a sliding manner with respect to the second link rod (18).

6. Device according to Claims 2 and 3, **characterized in that** the means for locking the lever (12) in the closed position has a stub (38) that is provided on the lever (12) and engages with a protrusion (37) provided on the support S.
